# EUROPÄISCHE PATENTANMELDUNG

(11) **EP 3 413 080 A1**
(43) Veröffentlichungstag der Anmeldung: **12.12.2018**
(21) Anmeldenummer: 18175865.7
(22) Anmeldetag: 05.06.2018
(51) Int. Cl.: G01S 7/497, G01S 17/93

(54) **OPTOELEKTRONISCHE DETEKTIONSVORRICHTUNG FÜR EIN KRAFTFAHRZEUG MIT ÜBER DENSELBEN SIGNALVERARBEITUNGSPFAD TESTBAREN SENDE- UND EMPFANGSWEG UND VERFAHREN ZUM BETREIBEN EINER SOLCHEN DETEKTIONSVORRICHTUNG**

(30) Priorität: 09.06.2017 DE 102017112789
(71) Anmelder: Valeo Schalter und Sensoren GmbH, 74321 Bietigheim-Bissingen (DE)
(72) Erfinder: Abbaz, Mohamed, 74321 Bietigheim-Bissingen (DE)

(57) **Zusammenfassung**

Die Erfindung betrifft eine optoelektronische Detektionsvorrichtung (2) für ein Kraftfahrzeug (1), mit einer Sendeeinheit (3), welche zumindest eine Lichtquelle (4) zum Abstrahlen eines Abtast-Lichtes (5) in eine Umgebung (24) der Detektionsvorrichtung (2) aufweist; mit einer Empfangseinheit (9), welche zumindest einen Empfangskanal (10) mit einer Haupt-Photodiode (11, 11a-11h) aufweist, wobei die Haupt-Photodiode (11, 11a-11h) zum Detektieren eines in der Umgebung (24) reflektierten Lichtanteils (12) des abgestrahlten Abtast-Lichtes (5) und Erzeugen eines dem detektierten Lichtanteil (12) entsprechenden elektrischen Signals ausgebildet ist; mit einer zusätzlichen Lichtquelle (6), welche ausgebildet ist, für ein Überprüfen eines Empfangspfads (8) der Detektionsvorrichtung (2) ein Testlicht (7) zu erzeugen; und mit einer zusätzlichen Photodiode (13), welche ausgebildet ist, für ein Überprüfen eines Sendepfads (14) der Detektionsvorrichtung (2) ein Referenz-Abtast-Licht (15) der Lichtquelle (4) zu detektieren; wobei die zusätzliche Photodiode (13) dem Empfangskanal (10) mit der Haupt-Photodiode (11, 11a-11h) zugeordnet ist und der Empfangskanal (10) zwischen den beiden ihm zugeordneten Photodioden (11, 11a-11h, 13) umschaltbar ist, sodass je nach Schaltzustand des Empfangskanals (10) das elektrische Signal der Haupt-Photodiode (11, 11a-11h) oder ein elektrisches Signal der zusätzlichen Photodiode (13) in denselben Signalverarbeitungspfad (16) der Detektionsvorrichtung (2) einspeisbar ist, um das Überprüfen der optoelektronischen Detektionsvorrichtung (2) zu verbessern.

## Beschreibung

Die Erfindung betrifft eine optoelektronische Detektionsvorrichtung für ein Kraftfahrzeug, mit einer Sendeeinheit, welche zumindest eine Lichtquelle zum Abstrahlen eines Abtast-Lichtes in die Umgebung der Detektionsvorrichtung aufweist, mit einer Empfangseinheit, welche zumindest einen Empfangskanal mit einer Haupt-Photodiode aufweist, wobei die Haupt-Photodiode zum Detektieren eines in der Umgebung reflektierten Lichtanteils des abgestrahlten Abtast-Lichtes und Erzeugen eines dem detektierten Lichtanteil entsprechenden elektrischen Signals ausgebildet ist, sowie mit einer zusätzlichen Lichtquelle, welche ausgebildet ist, für ein Überprüfen eines Empfangswegs der Detektionsvorrichtung ein Testlicht zu erzeugen und mit einer zusätzlichen Photodiode, welche ausgebildet ist, für ein Überprüfen eines Sendepfads der Detektionsvorrichtung ein Referenz-Abtast-Licht der Lichtquelle zu detektieren.

Mit der zunehmenden Bedeutung von Detektionsvorrichtungen in Kraftfahrzeugen, insbesondere optoelektronischen Detektionsvorrichtungen wie beispielsweise Lidar-Vorrichtungen (Light-Detection-and-Ranging-Vorrichtungen, Vorrichtungen zur optischen Abstands- und/oder Geschwindigkeitsmessung) für automatisierte Fahrfunktionen nimmt auch die Relevanz für entsprechende Diagnosen dieser Detektionsvorrichtungen zu.

So wird beispielsweise in der EP 2 927 711 B1 ein Laserscanner beschrieben, welcher einen Testlichtsender aufweist, um einen zugehörigen Lichtempfänger zu überprüfen. Dabei erzeugt eine zusätzliche Lichtquelle ein variables Testsignal, welches direkt oder über eine Ablenkeinheit zu dem Lichtempfänger gelangt. Zusätzlich weist der Laserscanner einen Testlichtempfänger auf, mit dem der Sendepfad getestet wird oder werden kann.

Es stellt sich daher die Aufgabe, ein Überprüfen oder Testen einer optoelektronischen Detektionsvorrichtung für ein Kraftfahrzeug zu verbessern.

Diese Aufgabe wird durch den Gegenstand des unabhängigen Patentanspruchs gelöst. Vorteilhafte Ausführungsformen ergeben sich aus den abhängigen Patentansprüchen, der Beschreibung und den Figuren.

Die Erfindung betrifft eine optoelektronische Detektionsvorrichtung für ein Kraftfahrzeug, mit einer Sendeeinheit, welche zumindest eine Lichtquelle zum Abstrahlen eines Abtast-Lichtes in eine Umgebung der Detektionsvorrichtung aufweist, und mit einer Empfangseinheit, welche zumindest einen Empfangskanal, bevorzugt mehrere Empfangskanäle, beispielsweise 16 Empfangskanäle, mit zumindest einer jeweiligen Normalbetriebs- oder Haupt-Photodiode aufweist. Unter einer Photodiode kann hier insbesondere allgemein ein optoelektrischer Wandler zum Umwandeln von optische in elektrische Signale verstanden werden. Dabei ist die Haupt-Photodiode zum Detektieren eines in der Umgebung des reflektierten Lichtanteils des von der Sendeeinheit abgestrahlten Abtast-Lichtes sowie zum Erzeugen eines dem detektierten Lichtanteil entsprechenden elektrischen Signals ausgebildet. Die dem detektierten Lichtanteil entsprechenden elektrischen Signale werden dabei in einen Signalverarbeitungspfad der Detektionsvorrichtung eingespeist.

Die optoelektronische Detektionsvorrichtung (im Folgenden auch kurz "Detektionsvorrichtung") weist auch eine zu der zumindest einen Lichtquelle zusätzliche Lichtquelle, eine Test-Lichtquelle, auf, welche ausgebildet ist, für ein Überprüfen eines Empfangspfads der Detektionsvorrichtung ein Testlicht zu erzeugen. Mit dem Testlicht kann somit die Empfangseinheit und/oder eine Recheneinheit zum Auswerten der (Empfangs-)Signale, welche von der Empfangseinheit bereitgestellt werden, überprüft werden. Entsprechend ist die Haupt-Photodiode auch ausgebildet, das Testlicht zu detektieren, entweder direkt (ohne Reflektion) oder indirekt (dann einen reflektierten Testlicht-Anteil des Testlichtes). Des Weiteren weist die optoelektronische Detektionsvorrichtung eine zu der oder den Normalbetriebs- beziehungsweise Haupt-Photodioden zusätzliche Photodiode, eine Test-Photodiode, auf, welche ausgebildet ist, für ein Überprüfen eines Sendepfads der Detektionsvorrichtung ein Referenz-Abtast-Licht der Lichtquelle zu detektieren. Das Referenz-Abtast-Licht kann das normale Abtast-Licht oder ein Anteil davon sein oder dieses umfassen. Zusätzlich kann die Detektionsvorrichtung eine Recheneinheit zum Steuern der Sendeeinheit und/oder Auswerten der Signale der Empfangseinheit aufweisen.

Wichtig ist hier, dass die zusätzliche Photodiode dem Empfangskanal mit der Haupt-Photodiode zugeordnet ist, im Falle von mehreren Empfangskanälen zumindest einem der Empfangskanäle mit einer Haupt-Photodiode, insbesondere allen Empfangskanälen mit einer Haupt-Photodiode, und der Empfangskanal oder die Empfangskanäle zwischen den (beiden) ihm zugeordneten Photodioden, der Haupt-Photodiode und der zusätzlichen Photodiode, umschaltbar ist, sodass je nach Schaltzustand des Empfangskanals das elektrische Signal der Haupt-Photodiode (insbesondere der Haupt-Photodioden) oder ein elektrisches Signal der zusätzlichen Photodiode in denselben dem Empfangskanal zugeordneten Signalverarbeitungspfad der Detektionsvorrichtung einspeisbar ist oder eingespeist wird.

Die Erfindung schlägt somit einen Aufbau für eine optoelektronische Detektionsvorrichtung vor, mit der sowohl der Sendepfad als auch der Empfangspfad auf Fehlfunktionen oder Störquellen überprüft werden kann. Die Vorrichtung weist dabei einen Empfänger (die Empfangseinheit) mit bevorzugt mehreren Haupt-Photodioden auf, wobei jede Haupt-Photodiode einen Empfangskanal darstellen kann. Zusätzlich weist die Detektionsvorrichtung zumindest eine Lichtquelle auf, mit der Licht in die Umgebung der Detektionsvorrichtung ausgesendet werden kann. Es kann dann entweder das Signal einer Haupt-Photodiode oder mehrerer Haupt-Photodioden der Empfangseinheit oder das Signal einer zusätzlichen Photodiode zum Testen des Sendepfads in denselben Signalverarbeitungspfad eingespeist werden. Es kann somit durch ein Umschalten des Empfangskanals ausgewählt werden, ob die zusätzliche Photodiode zum Testen des Sendepfades oder ob die Haupt-Photodiode oder Haupt-Photodioden der Empfangseinheit ausgewertet werden sollen.

Das hat den Vorteil, dass einerseits der Aufbau im Vergleich zu bekannten Lösungen vereinfacht wird, da weniger Komponenten benötigt werden. Der Signalverarbeitungspfad kann hier beispielsweise durch eine anwendungsspezifische integrierte Schaltung (Application Specific Integrated Circuit, ASIC) und/oder eine programmierbare logische Schaltung (Field Programmable Gate Array, FPGA) realisiert werden. Des Weiteren ergibt sich hier der Vorteil, dass nicht nur das Senden und/oder Empfangen als solches überprüft werden kann, sondern der Signalverarbeitungspfad selbst mit zwei unterschiedlichen Signalen überprüft werden kann, sodass beispielsweise auch die Recheneinheit zum Steuern der Sendeeinheit und zum Auswerten der Signale der Empfangseinheit mit überprüft werden kann. Durch die zusätzliche Photodiode kann somit ein Fehler in der Lichtquelle sowie in dem Signalverarbeitungspfad detektiert werden. Durch die zusätzliche Lichtquelle kann hier ein Fehler bei dem Detektieren des entsprechenden Lichts in der Haupt-Photodiode und ebenfalls im Signalverarbeitungspfad detektiert werden.

In einer vorteilhaften Ausführungsform ist vorgesehen, dass die optoelektronische Detektionsvorrichtung eine Lidar-Sensorvorrichtung umfasst oder ist. Derartige Lidar-Sensorvorrichtungen können die Umgebung durch einen Lichtstrahl des Abtast-Lichts seriell, also Punkt für Punkt nacheinander abtasten oder parallel, also beispielsweise großflächig durch einen Abtast-Licht-Blitz. Die Lidar-Sensorvorrichtung kann somit einen Laserscanner aufweisen. Die Lidar-Sensorvorrichtung kann auch eine Festkörper-Lidar-Sensorvorrichtung, eine sogenannte Solid-State-Lidar-Sensorvorrichtung, umfassen, welche keinen Laserscanner aufweist.

Gerade für Lidar-Sensorvorrichtungen ist die genannte Funktionalität besonders vorteilhaft, da diese oft für sicherheitsrelevante Funktionen, bei denen die gewünschte Genauigkeit mit großer Zuverlässigkeit bereitgestellt werden muss, verwendet werden.

In einer anderen vorteilhaften Ausführungsform ist vorgesehen, dass die Detektionsvorrichtung ausgebildet ist, im Betrieb wiederholt einen jeweiligen Messzyklus zu durchlaufen, in welchem die Sendeeinheit das Abtast-Licht beispielsweise in Form zumindest eines Pulses, bevorzugt in Form einer Vielzahl von Pulsen, beispielsweise in Form von mehr als 5.000 Pulsen, abstrahlt, die Empfangseinheit den oder die reflektierten Lichtanteile detektiert und der Empfangskanal auf die Haupt-Photodiode geschaltet ist, also Signale der Haupt-Photodiode in den dem Empfangskanal zugeordneten Signalverarbeitungspfad eingespeist werden. Dabei ist die Detektionsvorrichtung ausgebildet, jeweils nach dem Durchführen des Messzyklus einen Diagnosezyklus zu durchlaufen, in welchem der Empfangskanal zumindest zeitweise auf die zusätzliche Photodiode geschaltet ist, also Signale der zusätzlichen Photodiode in den dem Empfangskanal zugeordneten Signalverarbeitungspfad eingespeist werden.

Das hat den Vorteil, dass fortlaufend im Betrieb der Detektionsvorrichtung regelmäßig deren korrekte Funktionsweise überprüft wird.

Dabei kann insbesondere vorgesehen sein, dass der Diagnosezyklus kürzer ist als der Messzyklus. Insbesondere kann der Diagnosezyklus um mindestens den Faktor 100 kürzer sein als der Messzyklus. Bevorzugt ist der Diagnosezyklus um mindestens den Faktor 500 oder 1.000 kürzer. Beispielsweise kann der Messzyklus weniger als 80 Millisekunden und mehr als 40 Millisekunden dauern, und der Diagnosezyklus beispielsweise zwischen 10 und 30 Mikrosekunden, maximal 30 Mikrosekunden.

Das hat den Vorteil, dass der Messzyklus und damit der normale Betrieb der optoelektronischen Detektionsvorrichtung, in welchem beispielsweise eine Umgebung der Detektionsvorrichtung abgetastet und eine Entfernung zu einem Objekt ermittelt wird, nicht beeinträchtigt werden und dennoch die Detektionsvorrichtung regelmäßig überprüft und somit deren zuverlässiges Funktionieren sichergestellt wird.

In einer weiteren vorteilhaften Ausgestaltung ist vorgesehen, dass die Detektionsvorrichtung ausgebildet ist, in dem Diagnosezyklus zumindest einmal, also einmal oder mehrmals, durch die zusätzliche Lichtquelle das Testlicht zu erzeugen und durch die Haupt-Photodiode bei auf die Haupt-Photodiode geschaltetem Empfangskanal den reflektierten Anteil des Testlichts oder das Testlicht direkt zu detektieren und in dem Diagnosezyklus zumindest einmal, also einmal oder mehrmals, durch die Lichtquelle das Referenz-Abtast-Licht zu erzeugen und durch die zusätzliche Photodiode bei auf die zusätzliche Photodiode geschalteten Empfangskanal das Referenz-Abtast-Licht, welches das normale Abtast-Licht sein kann oder umfassen kann, zu detektieren. Das Referenz-Abtast-Licht und/oder das Testlicht kann die Form eines Lichtpulses haben, der bevorzugt kürzer als eine µs ist.

Das hat den Vorteil, dass sowohl Sende- als auch Empfangspfad in dem Diagnosezyklus überprüft wird. Da das Umschalten des Empfangskanals sehr schnell realisiert werden kann, kann der Diagnosezyklus auch sehr kurz ausfallen.

In einer anderen vorteilhaften Ausführungsform ist vorgesehen, dass die Detektionsvorrichtung die Recheneinheit zum Auswerten der (Empfangs-) Signale der Empfangseinheit aufweist, in welcher ein Empfangsweg-Referenzsignal und ein Sendeweg-Referenzsignal hinterlegt sind. Die Recheneinheit ist dabei ausgebildet, in Abhängigkeit eines Vergleichens des von dem detektierten reflektierten Lichtanteil des Testlichts oder des Testlichts selber verursachten elektrischen Signals mit dem Empfangsweg-Referenzsignal und/oder in Abhängigkeit eines Vergleichens des von dem detektierten Referenz-Abtast-Lichts verursachten elektrischen Signals mit dem Sendeweg-Referenzsignal ein Fehlersignal bereitzustellen oder auszuwählen. Das Fehlersignal kann hier bevorzugt als sogenannter Flag bereitgestellt oder ausgegeben werden.

Das hat den Vorteil, dass spezifische Fehler oder Abweichungen detektiert werden können, beispielsweise Farbabweichungen oder sonstige spektrale Abweichungen in den entsprechenden Signalen sowie weitere Fehler besonders genau detektiert werden können und die Diagnose in ihrer Genauigkeit verbessert wird.

Dabei kann insbesondere vorgesehen sein, dass das Empfangsweg-Referenzsignal und/oder das Sendeweg-Referenzsignal als jeweilige Kurve über einer Zeit vorgegeben sind. Beispielsweise kann so ein Intensitätsverlauf eines jeweils durch Haupt-Photodiode oder zusätzliche Photodiode empfangenen Signals in Intensität über der Zeit angegeben sein. Das hat den Vorteil einer erhöhten Genauigkeit der Diagnose.

In einer vorteilhaften Ausführungsform kann dabei vorgesehen sein, dass in der Recheneinheit ein Schwellwert hinterlegt ist und die Recheneinheit ausgebildet ist, das Fehlersignal bereitzustellen oder auszugeben, falls das jeweilige elektrische Signal von dem jeweiligen Referenzsignal um mehr als den Schwellwert abweicht. Der Schwellwert kann insbesondere ein jeweiliger Schwellwert sein, es kann also für den Empfangsweg und für den Sendeweg ein jeweiliger einzelner oder mehrere einzelne Schwellwerte vorgegeben werden.

Das hat den Vorteil, dass die Genauigkeit nochmals erhöht werden kann und dabei jedoch Fluktuationen, wie sie zu erwarten sind und welche keinen Fehler repräsentieren, nicht zu einem fehlerhaften oder fälschlicherweise ausgelösten Fehlersignal ("false positive") führen. Damit wird die Zuverlässigkeit der Diagnose erhöht.

In einer weiteren vorteilhaften Ausführungsform ist vorgesehen, dass die zusätzliche Photodiode so angeordnet ist, dass das Referenz-Abtast-Licht direkt, also auf direktem Weg und somit ohne Reflexionen in der Umgebung und/oder sonstigen Reflexionsflächen der Detektionsvorrichtung, durch die zusätzliche Photodiode detektierbar ist und/oder so angeordnet ist, dass ein Umgebungslicht aus der Umgebung nicht direkt, also nur mit einem Reflektieren an zumindest einer reflektierenden Oberfläche der Detektionsvorrichtung, detektierbar ist.

Das hat den Vorteil, dass das von der zusätzlichen Photodiode erfassbare oder detektierbare Licht genau definiert ist, sodass beispielsweise das entsprechende Referenzsignal ebenfalls besonders genau vorgegeben werden kann, sodass bereits kleine Abweichungen und somit ein geringfügiges Fehlverhalten der Detektionsvorrichtung detektierbar und nachweisbar ist.

Die Erfindung betrifft auch ein Kraftfahrzeug mit einer optoelektronischen Detektionsvorrichtung nach einer der beschriebenen Ausführungsformen.

Ferner umfasst die Erfindung auch ein Verfahren zum Betreiben einer optoelektronischen Detektionsvorrichtung für ein Kraftfahrzeug mit einer Reihe von Verfahrensschritten. Ein Verfahrensschritt ist dabei ein Abstrahlen eines Referenz-Abtast-Lichtes durch zumindest eine Lichtquelle einer Sendeeinheit der Detektionsvorrichtung. Ein weiterer Verfahrensschritt ist ein Detektieren des abgestrahlten Referenz-Abtast-Lichtes durch eine zusätzliche Photodiode eines Empfangskanals einer Empfangseinheit der Detektionsvorrichtung und ein Erzeugen eines dem detektierten Referenz-Abtast-Lichts entsprechenden elektrischen Signals durch die zusätzliche Photodiode. Darauf folgt ein Einspeisen des von der zusätzlichen Photodiode erzeugten elektrischen Signals in einen dem Empfangskanal zugeordneten Signalverarbeitungspfad der Detektionsvorrichtung für ein Überprüfen eines Sendepfades der Detektionsvorrichtung.

Des Weiteren umfasst das Verfahren ein Abstrahlen eines Testlichtes durch eine zusätzliche Lichtquelle der Sendeeinheit sowie ein Detektieren des abgestrahlten Testlichts durch zumindest eine Haupt-Photodiode des einen Empfangskanals der Empfangseinheit der Detektionsvorrichtung sowie ein Erzeugen eines dem detektierten Testlicht entsprechenden elektrischen Signals durch die Haupt-Photodiode. Darauf folgt ein Einspeisen des von der Haupt-Photodiode erzeugten elektrischen Signals in den einen Signalverarbeitungspfad der Detektionsvorrichtung für ein Überprüfen eines Empfangspfads der Detektionsvorrichtung. Wichtig ist dabei ein Umschalten des Empfangskanals von der Photodiode, deren elektrisches Signal bei dem letzten Einspeisen in den einen Signalverarbeitungspfad eingespeist wurde, zu der Photodiode, deren elektrisches Signal bei dem nächsten Einspeisen in den einen Signalverarbeitungspfad eingespeist wird. Das Umschalten erfolgt somit jeweils von der zumindest einen Haupt-Photodiode zur zusätzlichen Diode oder umgekehrt.

Vorteile und vorteilhafte Ausführungsformen des Verfahrens entsprechen hier Vorteilen und vorteilhaften Ausführungsformen der Detektionsvorrichtung.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Ausführungsbeispiele der Erfindung werden nachfolgend anhand schematischer Zeichnungen näher erläutert. Dabei zeigen:
- Fig. 1: ein Kraftfahrzeug mit einer beispielhaften Ausführungsform einer optoelektronischen Detektionsvorrichtung; und
- Fig. 2: einen schematischen Aufbau einer beispielhaften Ausführungsform einer optoelektronischen Detektionsvorrichtung.

In den Figuren werden gleiche oder funktionsgleiche Elemente mit den gleichen Bezugszeichen versehen.

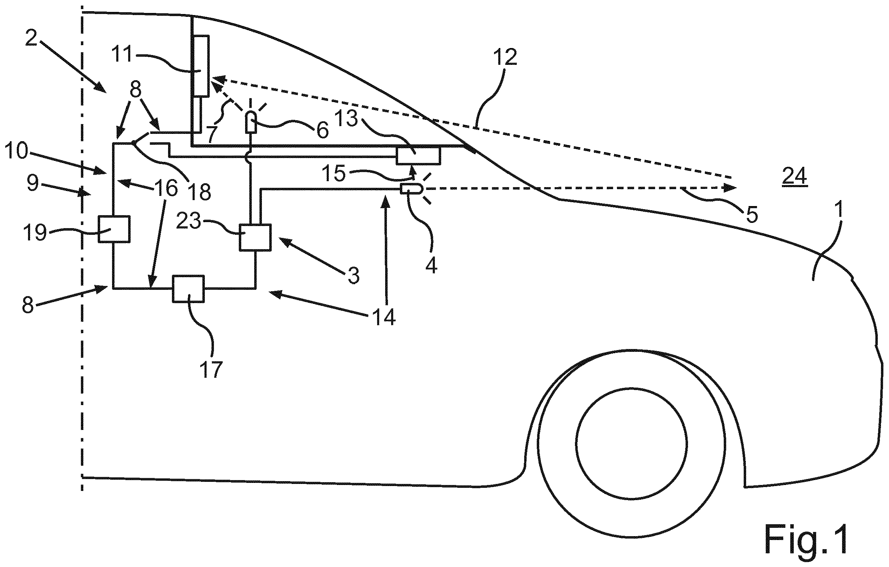

In Fig. 1 ist ein Kraftfahrzeug 1 mit einer beispielhaften Ausführungsform einer optoelektronischen Detektionsvorrichtung 2 dargestellt. Eine Sendeeinheit 3 weist dabei eine Lichtquelle 4 zum Abstrahlen eines Abtast-Lichts 5 in eine Umgebung 24 des Kraftfahrzeugs 1 und damit der optoelektronischen Detektionsvorrichtung 2 auf. Die Sendeeinheit 3 weist dabei vorliegend auch zum Erzeugen eines Testlichtes 7 eine zusätzliche Lichtquelle 6 auf. Mit der zusätzlichen Lichtquelle 6 kann somit mittels des Testlichts 7 ein Empfangspfad 8 der Detektionsvorrichtung 2 überprüft werden.

Die Detektionsvorrichtung 2 weist auch eine Empfangseinheit 9 auf, welche zumindest einen Empfangskanal 10 mit einer Haupt-Photodiode 11 hat. Die Haupt-Photodiode 11 ist hier ausgebildet zum Detektieren eines in der Umgebung 24 reflektierten Lichtanteils 12 des abgestrahlten Abtast-Lichts 5 sowie zum Erzeugen eines dem detektierten Lichtanteil 12 entsprechenden elektrischen Signals. Zugleich kann die Haupt-Photodiode 11 selbstverständlich das Testlicht 7 detektieren und ein diesem entsprechendes elektrisches Signal erzeugen. Vorliegend weist die Empfangseinheit 9 auch eine zusätzliche Photodiode 13 auf, welche ausgebildet ist, für ein Überprüfen eines Sendepfads 14 der Detektionsvorrichtung 2 ein Referenz-Abtast-Licht 15 der Lichtquelle 4 zu detektieren.

Dabei ist die zusätzliche Photodiode 13 dem Empfangskanal 10 mit der Haupt-Photodiode 11 zugeordnet und der Empfangskanal 10 im gezeigten Beispiel mit einem Schalter 18 zwischen den beiden ihm zugeordneten Photodioden 11, 13 umschaltbar. Somit ist je nach Schaltzustand des Empfangskanals 10 das elektrische Signal der Haupt-Photodiode 11 oder ein elektrisches Signal der zusätzlichen Photodiode 13 in denselben Signalverarbeitungspfad 16 der Detektionsvorrichtung 2 einspeisbar. Vorliegend ist auch eine Recheneinheit 17 Teil der Detektionsvorrichtung 2, welche die Sendeeinheit 3 steuert und entsprechende (Empfangs-) Signale der Empfangseinheit 9 auswertet. Die Recheneinheit 17 kann beispielsweise im Falle eines Fehlers ein Fehlersignal bereitstellen. Die zusätzliche Photodiode 13 ist vorliegend derart ausgebildet, dass sie ein Licht aus der Umgebung 24 nicht unmittelbar, also nicht ohne ein Reflektieren an einer weiteren Fläche detektiert. Das Referenz-Abtast-Licht 15, welches identisch mit dem Abtast-Licht 5 sein kann oder Teil desselben sein kann, kann hingegen von der zusätzlichen Photodiode 13 direkt detektiert werden.

Vorliegend kann so beispielsweise die Funktionsweise eines Verstärkers 19 im Empfangsweg 8 und die Funktionsweise einer Auslöseeinheit 23 im Sendeweg 14 überprüft werden.

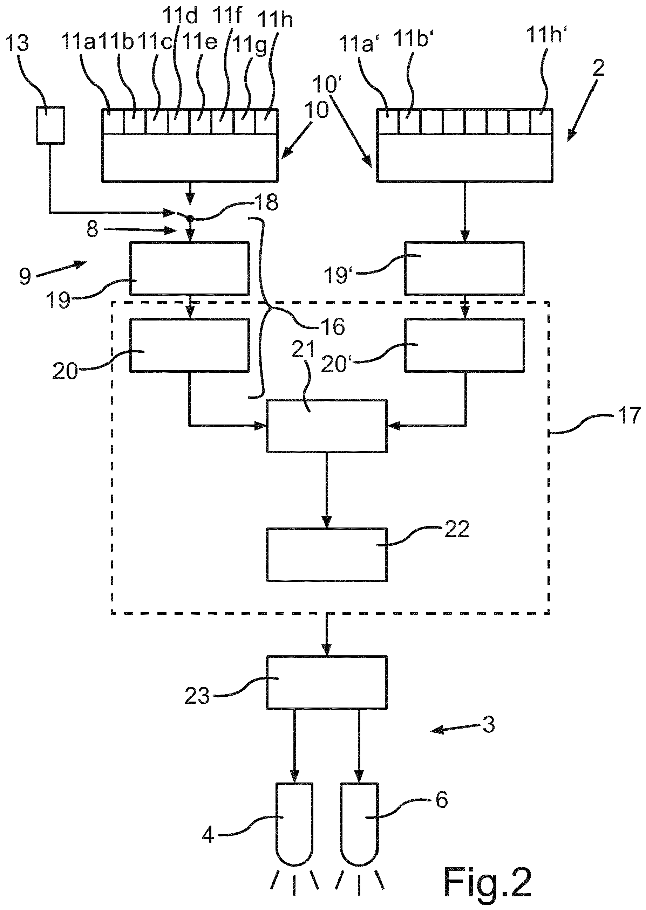

In Fig. 2 ist eine beispielhafte Ausgestaltung einer optoelektronischen Detektionsvorrichtung 2 dargestellt. Diese unterscheidet sich von der in Fig. 1 dargestellten Variante dadurch, dass ein weiterer Empfangskanal 10' vorhanden ist. Es können auch mehr, beispielsweise 16 Empfangskanäle, vorhanden sein. Überdies ist vorliegend eine Mehrzahl von Photodioden, vorliegend acht Photodioden 11a bis 11h, in dem ersten Empfangskanal 10 und 11a' bis 11h' in dem zweiten Empfangskanal 10' vorhanden. Durch den Schalter 18 ist wieder der Empfangskanal 10 zwischen der zusätzlichen Photodiode 13 und den mehreren, vorliegend acht, Haupt-Photodioden 11a bis 11h dieses Empfangskanals 10 umschaltbar. Somit ist der Signalverarbeitungspfad 16 der Detektionsvorrichtung 2 überprüfbar beziehungsweise unterschiedliche elektrische Signale in diesen einspeisbar. Vorliegend wird somit durch die jeweiligen Photodioden 11a bis 11h, 11a' bis 11h' beziehungsweise 13, ein optisches Signal in ein elektrisches Signal umgewandelt, welches sodann im gezeigten Beispiel in einem Verstärker 19, 19' verstärkt und vorliegend in einer Recheneinheit 17 mit einem jeweiligen Wandler 20, 20' in ein digitales Signal umgewandelt wird. Diese jeweiligen digitalen Signale werden vorliegend in einer Schnittstelleneinheit 21 zusammengeführt und sodann in der Recheneinheit 17 von einer Verarbeitungseinheit 22 verarbeitet. Beispielsweise kann dort ein Vergleichen der entsprechenden Signale mit einem hinterlegten Referenzsignal vorgenommen werden.

Für ein Überprüfen der Detektionsvorrichtung 2 kann so beispielsweise zunächst durch die Lichtquelle 4, welche beispielsweise als lichtemittierende Diode (LED) oder als Laserdiode (LD) ausgeführt sein kann, in einem gewünschten Wellenlängenbereich das Referenz-Abtast-Licht 15 erzeugt werden. Dies erfolgt dabei bevorzugt in direkter Blicklinie vor der zusätzlichen Photodiode 13 und in möglichst großer Nähe, um ein effektives Detektieren des Referenz-Abtast-Lichtes 15 durch die zusätzliche Photodiode 13 zu ermöglichen. Des Weiteren kann ein durch die zusätzliche Photodiode 13 erzeugtes elektrisches Signal beispielsweise durch eine Multiplexeinheit oder einen Verstärker 19 verarbeitet und beispielsweise über den Wandler 20 nach dem Abtasten in einen digitalen Code konvertiert werden. Dieses elektrische Signal wird dann durch den normalen, also auch in dem Messzyklus oder Normalbetriebsmodus genutzten, Signalverarbeitungspfad 16 übermittelt. Nach einem Vergleichen des übermittelten Signals mit einem erwarteten Signal, welches in Form eines jeweiligen Referenzsignals, vorliegend eines Sendeweg-Referenzsignals, hinterlegt ist, wird vorliegend durch die Recheneinheit 17 ein Fehlersignal bereitgestellt. Wird das Fehlersignal bereitgestellt, so kann beispielsweise die optoelektronische Detektionsvorrichtung 2 in einen sogenannten Fail-Safe-Zustand überführt werden.

Die zusätzliche Photodiode 13 ist dabei nahe der Lichtquelle 4 angeordnet. Über die zusätzliche Photodiode 13 wird also die Lichtquelle 4 überwacht. In einem Messzyklus pulsiert nun beispielsweise die Lichtquelle 4 über einen vorgegebenen Zeitraum hinweg mehrere tausend Male, beispielsweise 8.152 Mal. Dieser Zeitraum kann sich beispielsweise zwischen 40 und 80 Millisekunden bewegen. Nach dem Messzyklus erzeugt die Lichtquelle 4 in einem Diagnosezyklus vorliegend einen zusätzlichen Lichtpuls. Dieser wird durch die zusätzliche Photodiode 13 detektiert. Über das resultierende elektrische Signal der zusätzlichen Photodiode 13 kann die optoelektronische Detektionsvorrichtung 2 nun sicherstellen, dass die Lichtquelle 4 ordnungsgemäß arbeitet. Die zusätzliche Photodiode 13 teilt dabei den Messkanal 8 mit der oder den Haupt-Photodioden 11, 11a bis 11h. Nach dem Messen der Lichtpulse, vorliegend der 8.152 Lichtpulse in dem Messzyklus, wird der eine Messkanal 8 auf die zusätzliche Photodiode 13 umgeschaltet und der eine zusätzliche Lichtpuls durch die Lichtquelle 4 erzeugt. Da die zusätzliche Photodiode 13 sehr nah an der Lichtquelle 4 angeordnet ist und vorteilhafterweise gegen ein Ambientelicht, also ein Licht aus der Umgebung 24, abgeschirmt ist, kann das Referenz-Abtast-Licht 15 sehr klar durch die Photodiode 13 erfasst werden. Dabei kann für das digitalisierte und gesampelte oder abgetastete, analoge Signal, welches dem Referenz-Abtast-Licht 15 entspricht, ein Empfangsweg-Referenzsignal in Form einer zeitlichen Kurve hinterlegt sein, sowie ein Akzeptanzkriterium in Form eines Schwellwerts, und bei einem Abweichen der Samples des Signals in ihrem Verlauf von der hinterlegten Kurve um mehr als den Schwellwert ein Fehlersignal ausgegeben werden.

Für ein Überprüfen des Empfangswegs wird die zusätzliche Lichtquelle 6 aktiviert, und ein entsprechendes Testlicht 7 mit gewünschten spektralen Eigenschaften, beispielsweise einer gewünschten Wellenlängenverteilung, erzeugt. Die zusätzliche Lichtquelle 6 befindet sich dabei bevorzugt ebenfalls in direkter Blicklinie zu den Haupt-Photodioden 11, 11a bis 11h, 11a' bis 11h', und in möglichst großer Nähe zu den Dioden der Detektionsvorrichtung 2. Das Testlicht 7 wird durch die Haupt-Photodioden 11a bis 11h, 11a' bis 11h' detektiert und in ein elektrisches Signal umgewandelt. Dieses Signal wird sodann im die normal Signalverarbeitungspfad verarbeitet, vorliegend verstärkt, abgetastet und als digitaler Code übermittelt und vorliegend in der Recheneinheit 17 wieder mit einem Referenzsignal, vorliegend einem Empfangweg-Referenzsignal, verglichen. Wird ein Fehler detektiert, wird auch hier ein sogenannter Fail-Safe-Zustand eingestellt. Wieder wird somit die korrekte Konvertierung vom optischen Signal in ein analoges elektrisches Signal sowie von dem analogen elektrischen Signal in ein digitales Signal, den Code, also von einem Licht in einen Strom und von einem Strom in eine Spannung, überprüft.

Ist nun in dem Messzyklus eine Reihe von Lichtpulsen erzeugt worden, so kann in dem darauffolgenden Diagnosezyklus durch die zusätzliche Lichtquelle 6 ein weiterer Lichtpuls erzeugt werden. Dieser wird nun von den Haupt-Photodioden 11, 11a bis 11h, 11a' bis 11h', detektiert. Über ein Vergleichen des dann von den Haupt-Photodioden 11, 11a bis 11h, 11a' bis 11h' erzeugten elektrischen Signals oder eines von diesem Signal abgeleiteten Signals mit dem Empfangsweg-Referenzsignal kann die Detektionsvorrichtung 2 feststellen, dass die Haupt-Photodioden 11, 11a bis 11h, 11a' bis 11h' und der entsprechende Empfangsweg 8 wie vorgesehen arbeiten. Auch hier kann entsprechend dem oben Beschriebenen mutatis mutandis ein Akzeptanzkriterium in Form eines Schwellwerts vorgegeben werden.

## Patentansprüche

1. Optoelektronische Detektionsvorrichtung (2) für ein Kraftfahrzeug (1), mit
- einer Sendeeinheit (3), welche zumindest eine Lichtquelle (4) zum Abstrahlen eines Abtast-Lichtes (5) in eine Umgebung (24) der Detektionsvorrichtung (2) aufweist;
- einer Empfangseinheit (9), welche zumindest einen Empfangskanal (10) mit einer Haupt-Photodiode (11, 11a-11h) aufweist, wobei die Haupt-Photodiode (11, 11a-11h) zum Detektieren eines in der Umgebung (24) reflektierten Lichtanteils (12) des abgestrahlten Abtast-Lichtes (5) und Erzeugen eines dem detektierten Lichtanteil (12) entsprechenden elektrischen Signals ausgebildet ist;
- einer zusätzlichen Lichtquelle (6), welche ausgebildet ist, für ein Überprüfen eines Empfangspfads (8) der Detektionsvorrichtung (2) ein Testlicht (7) zu erzeugen; und
- einer zusätzlichen Photodiode (13), welche ausgebildet ist, für ein Überprüfen eines Sendepfads (14) der Detektionsvorrichtung (2) ein Referenz-Abtast-Licht (15) der Lichtquelle (4) zu detektieren;
**dadurch gekennzeichnet, dass**
die zusätzliche Photodiode (13) dem Empfangskanal (10) mit der Haupt-Photodiode (11, 11a-11h) zugeordnet ist und der Empfangskanal (10) zwischen den beiden ihm zugeordneten Photodioden (11, 11a-11h, 13) umschaltbar ist, sodass je nach Schaltzustand des Empfangskanals (10) das elektrische Signal der Haupt-Photodiode (11, 11a-11h) oder ein elektrisches Signal der zusätzlichen Photodiode (13) in denselben Signalverarbeitungspfad (16) der Detektionsvorrichtung (2) einspeisbar ist.

2. Optoelektronische Detektionsvorrichtung (2) nach Anspruch 1,
**dadurch gekennzeichnet, dass**
die optoelektronische Detektionsvorrichtung (2) eine Lidar-Sensorvorrichtung umfasst.

3. Optoelektronische Detektionsvorrichtung (2) nach einem der vorhergehenden Ansprüche,
**dadurch gekennzeichnet, dass**
die Detektionsvorrichtung (2) ausgebildet ist, wiederholt einen jeweiligen Messzyklus zu durchlaufen, in welchem die Sendeeinheit (3) das Abtast-Licht (5) abstrahlt, die Empfangseinheit (9) den reflektierten Lichtanteil (12) detektiert und der Empfangskanal (10) auf die Haupt-Photodiode (11, 11a-11h) geschaltet ist, und jeweils nach dem Durchführen des Messzyklus einen Diagnosezyklus zu durchlaufen, in welchem der Empfangskanal (10) zumindest zeitweise auf die zusätzliche Photodiode (13) geschaltet ist.

4. Optoelektronische Detektionsvorrichtung (2) nach Anspruch 3,
**dadurch gekennzeichnet, dass**
der Diagnosezyklus kürzer ist als der Messzyklus, insbesondere um mindestens den Faktor hundert kürzer, bevorzugt um mindestens den Faktor 500 oder 1000 kürzer.

5. Optoelektronische Detektionsvorrichtung (2) nach Anspruch 3 oder 4,
**dadurch gekennzeichnet, dass**
die Detektionsvorrichtung (2) ausgebildet ist, in dem Diagnosezyklus zumindest einmal durch die zusätzliche Lichtquelle (6) das Testlicht (7) zu erzeugen und durch die Haupt-Photodiode (11, 11a-11h) bei auf die Haupt-Photodiode (11, 11a-11h) geschaltetem Empfangskanal (10) das Testlicht (7) zu detektieren und in dem Diagnosezyklus zumindest einmal durch die Lichtquelle (4) das Referenz-Abtast-Licht (15) zu erzeugen und durch die zusätzliche Photodiode (13) bei auf die zusätzliche Photodiode (13) geschaltetem Empfangskanal (10) das Referenz-Abtast-Licht (15) zu detektieren.

6. Optoelektronische Detektionsvorrichtung (2) nach einem der vorhergehenden Ansprüche,
**dadurch gekennzeichnet, dass**
die Detektionsvorrichtung (2) eine Recheneinheit (17) zum Auswerten der Empfangssignale der Empfangseinheit (9) aufweist, in welcher ein Empfangsweg-Referenzsignal und ein Sendeweg-Referenzsignal hinterlegt ist, und die Recheneinheit (17) ausgebildet ist, in Abhängigkeit eines Vergleichens des Testlichts (7) verursachten elektrischen Signals mit dem Empfangsweg-Referenzsignal und/oder in Abhängigkeit eines Vergleichens des von dem detektierten Referenz-Abtast-Lichts (15) verursachten elektrischen Signals mit dem Sendeweg-Referenzsignal ein Fehlersignal bereitzustellen.

7. Optoelektronische Detektionsvorrichtung (2) nach Anspruch 6,
**dadurch gekennzeichnet, dass**
das Empfangsweg-Referenzsignal und/oder das Sendeweg-Referenzsignal als jeweilige Kurve über einer Zeit vorgegeben ist.

8. Optoelektronische Detektionsvorrichtung (2) nach Anspruch 6 oder 7,
**dadurch gekennzeichnet, dass**
in der Recheneinheit (17) ein Schwellwert hinterlegt ist und die Recheneinheit (17) ausgebildet ist, das Fehlersignal bereitzustellen, falls das jeweilige elektrische Signal von dem jeweiligen Referenzsignal um mehr als den Schwellwert abweicht.

9. Optoelektronische Detektionsvorrichtung (2) nach einem der vorhergehenden Ansprüche,
**dadurch gekennzeichnet, dass**
die zusätzliche Photodiode (13) so angeordnet ist, dass das Referenz-Abtast-Licht (15) direkt durch die zusätzliche Photodiode (13) detektierbar ist und/oder dass ein Umgebungslicht aus der Umgebung (24) nicht direkt durch die zusätzliche Photodiode (13)detektierbar ist.

10. Kraftfahrzeug (1) mit einer optoelektronischen Detektionsvorrichtung (2) nach einem der vorhergehenden Ansprüche.

11. Verfahren zum Betreiben einer optoelektronischen Detektionsvorrichtung (2) für ein Kraftfahrzeug (1), mit
- einem Abstrahlen eines Referenz-Abtast-Lichtes (15) durch zumindest eine Lichtquelle (4) einer Sendeeinheit (3) der Detektionsvorrichtung (2);
- einem Detektieren des abgestrahlten Referenz-Abtast-Lichtes (15) durch eine zusätzliche Photodiode (13) eines Empfangskanals (10) einer Empfangseinheit (9) der Detektionsvorrichtung (2), und Erzeugen eines dem detektierten Referenz-Abtast-Licht (15) entsprechenden elektrischen Signals durch die zusätzliche Photodiode (13);
- Einspeisen des von der zusätzlichen Photodiode (13) erzeugten elektrischen Signals in einen Signalverarbeitungspfad (16) der Detektionsvorrichtung (2) für ein Überprüfen eines Sendepfads (14) der Detektionsvorrichtung (2);
- einem Abstrahlen eines Testlichts (7) durch eine zusätzliche Lichtquelle (6) der Sendeeinheit (3);
- einem Detektieren des abgestrahlten Testlichts (7) durch zumindest eine Haupt-Photodiode (11, 11a-11h) des einen Empfangskanals (10) der Empfangseinheit (9) der Detektionsvorrichtung (2), und Erzeugen eines dem detektierten Testlicht (7) entsprechenden elektrischen Signals durch die Haupt-Photodiode (11, 11a-11h);
- Einspeisen des von der Haupt-Photodiode (11, 11a-11h) erzeugten elektrischen Signals in den einen Signalverarbeitungspfad (16) der Detektionsvorrichtung (2) für ein Überprüfen eines Empfangspfads (8) der Detektionsvorrichtung (2); sowie mit einem
- einem Umschalten des Empfangskanals (10) von der Photodiode (11, 11a-11h, 13), deren elektrisches Signal bei dem letzten Einspeisen in den einen Signalverarbeitungspfad (16) eingespeist wurde, zu der Photodiode (11, 11a-11h 13), welche bei dem nächsten Einspeisen in den einen Signalverarbeitungspfad (16) eingespeist wird.
